# EUROPEAN PATENT APPLICATION

(11) **EP 0 810 169 A1**
(43) Date of publication of application: **03.12.1997**
(21) Application number: 97106691.5
(22) Date of filing: 23.04.1997
(51) Int. Cl.: B65G 23/06

(54) **Assembly of sprockets and a shaft for wide chain conveyor**

(30) Priority: 27.05.1996 JP 132081/96
(71) Applicant: TSUBAKIMOTO CHAIN CO., Osaka-fu 538 (JP)
(72) Inventor: Takahashi, Toshio, Toyonaka-shi, Osaka-fu (JP); Shibayama, Katsutoshi, Higashiosaka-shi, Osaka-fu (JP); Ikeda, Masaaki, Kadoma-shi, Osaka-fu (JP)
(74) Representative: Naumann, Ulrich, Dr.-Ing.

(57) **Abstract**

To provide an assembly of sprockets and a shaft for a wide conveyor which can minimize the amount of meandering of the wide chain conveyor and can reduce wear of the sprocket pockets of the wide conveyor chain and the teeth of the sprockets.

One of a plurality of sprockets 2 and fitted on a shaft 1 such that they are restrained from rotating relative to the shaft 1 but are slidable in the axial direction, is limited in its slidable range in the axial direction by movement-limiting members 6. The slidable range is set substantially equal to the sum of a maximum widthwise-measured deflection of the sprocket during rotation, which deflection is caused by a fabrication error of the sprocket and an error produced when the sprocket is attached to the shaft, and an amount of meandering of a wide chain, which meandering is caused by a fabrication error of sprocket pockets formed in the wide chain for engagement with the sprocket.

## Description

### [DETAILED DESCRIPTION OF THE INVENTION]

### [Field of the Invention]

The present invention relates to an assembly of sprockets and a shaft for use in a wide chain conveyor capable of providing various widths through widthwise-established connection of a plurality of chain links.

### [Prior Art]

Conventionally, a wide chain conveyor comprises a wide chain capable of providing various widths through widthwise-established connection of a plurality of chain links, and is widely used in processes accompanied by variation in temperature, as in the food processing field or the like.

In many of such wide chain conveyors, sprocket teeth are engaged with sprocket pockets, formed in chain links made of resin and composing a wide chain, so as to drive the chain link, and a plurality of sprockets whose number corresponds to the width of the wide chain are arranged in the axial direction of a driving shaft. Furthermore, in order to cope with widthwise-measured dimensional variation of the wide chain caused by thermal expansion or contraction of the wide chain due to variation in ambient temperature, the sprockets are usually attached to the shaft such that they are slidable in the axial direction of the shaft.

Allowing sprockets to vary their intervals, a wide chain conveyor having the above-described structure employs a measure to prevent a wide chain from meandering. For example, as described in reissued US Patent Re30341, one of a plurality of sprockets is fixed so as to not move in the axial direction of a shaft to thereby guide a wide chain such that it runs along a predetermined path, and the remaining sprockets are allowed to slide in the axial direction of the shaft to thereby cope with widthwise-measured dimensional variation of the wide chain. Also, as described in Japanese Patent Publication (*kokoku*) No. 8-5532, at least two of a plurality of sprockets arranged slidable in the axial direction of a shaft are prevented from moving far outward in the axial direction of the shaft by restraining means, and teeth of the two sprockets are engaged with sprocket pockets of a wide chain to thereby prevent the wide chain from meandering.

### [Problems to be Solved by the Invention]

However, according to the measure disclosed in the above-described reissued US Patent Re30341, a deflection of the sprocket fixed on the shaft, which deflection is caused by an attachment or fabrication error of the sprocket, and a fabrication error of sprocket pockets formed in a wide chain tend to cause a load to act widthwise on the teeth of the sprocket and the sprocket pockets, which engage with the teeth of the sprocket. This results in wear or breakage of the teeth of the sprocket and the sprocket pockets.

According to the measure described in the Japanese Patent Publication (*kokoku*) No. 8-5532, in consideration of a widthwise-measured thermal expansion of a wide chain caused by variation in ambient temperature, an error in the interval between sprocket pockets formed in chain links corresponding to the two sprockets whose movement is restrained by the restraining means, and an attachment and fabrication error of the two sprockets, there must be provided a relatively large difference between the design distance between the outer surfaces of the two sprockets and the distance between the two restraining means.

However, when the ambient temperature drops, the wide chain contracts widthwise, thus increasing the above-described difference and resulting in an increased amount of meandering of the wide chain. Particularly, when an article to be conveyed (hereinafter merely referred to as an article) is transferred between the wide chain conveyor and an adjacent conveyor located by the side of the wide chain conveyor, the clearance between the conveyors may expand during transfer of an article under certain conditions, such as the shape and the position of the center of gravity of an article, a conveyance speed, and the like. As a result, part of an article may become caught in the clearance, resulting in the falling of or damage to the article.

An object of the present invention is to provide an assembly of sprockets and a shaft for a wide chain conveyor capable of solving the problems involved in the prior art to thereby minimize the amount of meandering of the wide chain conveyor and reduce wear of the sprocket pockets of the wide conveyor chain and the teeth of the sprockets.

### [Means to Solve the Problems]

To achieve the above object, the present invention provides an assembly of sprockets and a shaft for a wide chain conveyor wherein one of a plurality of sprockets, which are fitted on a shaft such that they are restrained from rotating relative to the shaft but are slidable in the axial direction of the shaft, is limited in its slidable range in the axial direction of the shaft by movement-limiting members fixed on the shaft on both sides of and adjacently to the sprocket. This slidable range is set substantially equal to the sum of a maximum widthwise-measured deflection of the sprocket during rotation, which deflection is caused by a fabrication error of the sprocket and an error produced when the sprocket is attached to the shaft, and an amount of meandering of a wide chain, which meandering is caused by a fabrication error of sprocket pockets formed in the wide chain for engagement with the sprocket.

Preferably, the movement-limiting members limit the slidable range of a sprocket located substantially at the widthwise-measured center of the wide chain. Also, preferably, the movement-limiting members limit the slidable range of a sprocket located closest to a conveyor which is disposed by the side of and adjacently to the wide chain for transferring an article to and from the wide chain.

### [Action]

The plurality of sprockets fitted on the shaft engage with sprocket pockets formed in the wide chain so as to run the wide chain or guide the running wide chain.

Since these sprockets are fitted on the shaft such that they are slidable in the axial direction of the shaft, they slide in the axial direction of the shaft in accordance with variation in intervals between the sprocket pockets caused by thermal expansion or contraction of the wide chain due to variation in ambient temperature.

In this case, a slidable range for one of the sprockets is set substantially equal to the sum of a maximum widthwise-measured deflection of the sprocket during rotation, which deflection is caused by a fabrication error of the sprocket and an error produced when the sprocket is attached to the shaft, and an amount of meandering of the wide chain, which meandering is caused by a fabrication error of the sprocket pockets formed in the wide chain for engagement with the sprocket. Accordingly, the wide chain and the sprocket smoothly engage, and the wide chain runs along a predetermined path while its meandering is minimized.

When the movement-limiting members limit the slidable range of the sprocket located substantially at the widthwise-measured center of the wide chain, the width of the wide chain varies in accordance with variation in ambient temperature such that the width variation is symmetrical in reference to the center of the wide chain, thereby minimizing a positional variation at both side edges of the wide chain. When the movement-limiting members limit the slidable range of a sprocket located closest to a conveyor which is disposed by the side of and adjacently to the wide chain for transferring an article to and from the wide chain, variation in the clearance between the wide chain and the adjacent conveyor caused by variation in ambient temperature is minimized.

### [Embodiments]

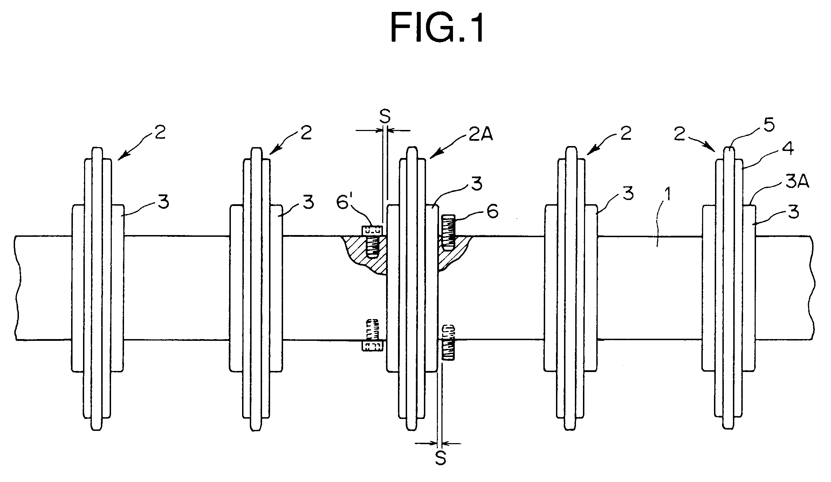

Embodiments of the present invention will next be described with reference to the drawings. Fig. 1 is a partial side view showing an assembly of sprockets and a shaft for a wide chain conveyor according to a first embodiment of the present invention. In the first embodiment, a plurality of sprockets 2 and 2A are arranged at certain intervals in the axial direction of a shaft 1 having a tetragonal cross section.

The shaft 1 is used as a driving or follower shaft of a wide chain conveyor. Sprockets 2 and 2A fitted on the shaft 1 are engaged with sprocket pockets formed in an unillustrated wide chain so as to run the wide chain. The sprockets 2 and 2A are fabricated in the same shape. Each of the sprockets 2 and 2A has a boss portion 3 in which a shaft hole having a tetragonal cross section is formed so as to allow the shaft 1 to penetrate therethrough.

The shaft hole is formed slightly larger than the outer contour of the shaft 1 so that the sprockets 2 and 2A can slide on the shaft 1 in the axial direction of the shaft 1. Also, in order that the surface of the shaft hole is sufficiently guided by the outer surface of the shaft 1 to restrict a skew of the sprockets 2 and 2A relative to the shaft 1, the boss portion 3 is formed relatively broad in the axial direction of the shaft 1.

The outer surface 3A of the boss portion 3 is formed such that the boss portion 3 has a tetragonal cross section that surrounds the tetragonal shaft hole. A circular rim portion 4 is formed outside the boss portion 3. Further, a plurality of teeth 5 are formed on the circumferential surface of the rim portion 4 so as to engage with sprocket pockets formed in the wide chain.

These sprockets 2 and 2A are incorporated into a wide chain conveyor such that they are arranged in the axial direction of the shaft 1 symmetrically in reference to the widthwise-measured center of the wide chain. Further, only the sprocket 2A, located at the center in the axial direction of the shaft 1, is limited in its slidable range by movement-limiting members such that it only can slide in the axial direction of the shaft within a relatively narrower range. Other sprockets 2 can freely slide in the axial direction of the shaft.

In the present embodiment, the movement-limiting members comprise hexagon socket screws 6 and hexagon head cap screws 6'. Each of the hexagon socket screws 6 and the hexagon head cap screws 6' is engaged with a tapped hole formed in the outer surface of the shaft 1 such that a small clearance S is formed between it and the corresponding side surface of the boss portion 3 of the central sprocket 2A.

In Fig. 1, the hexagon socket screws 6 and the hexagon head cap screws 6' are mixedly provided as movement-limiting members for description purpose. In actuality, movement-limiting members of the same kind may be provided in proximity to both side surfaces of the boss 3 of the central sprocket 2A.

The clearance S is set substantially equal to half of the sum of a maximum widthwise-measured deflection of the rotating sprocket 2A, which deflection is caused by a fabrication error of the sprocket 2A and an error produced when the sprocket 2A is attached to the shaft 1, and an amount of meandering of an unillustrated wide chain, which meandering is caused by a fabrication error of sprocket pockets formed in the wide chain for engagement with the sprocket 2A. The clearance S is preferably set to about 0.5 mm. The thus-set clearance S absorbs a widthwise-measured deflection of the sprocket 2A caused by an attachment-to-the-shaft 1 error of the sprocket 2A and a fabrication error of the teeth 5, a fabrication error of sprocket pockets formed in the wide chain, and the like, thereby smoothly running the wide chain and minimizing meandering of the running wide chain.

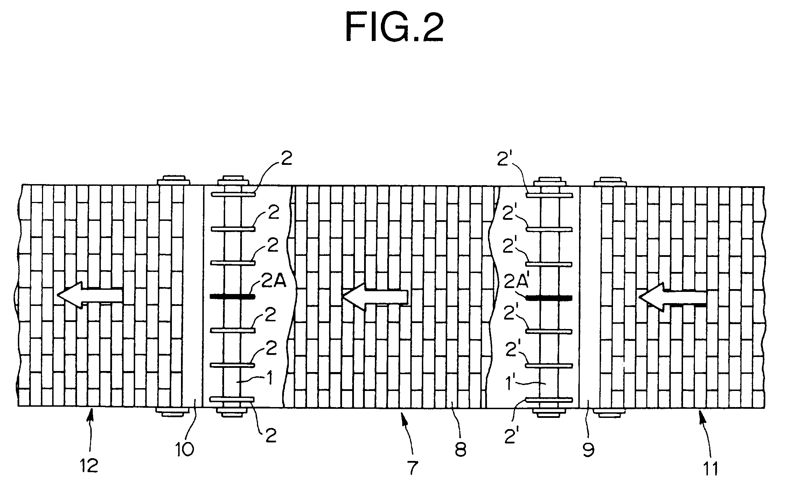

Fig. 2 is a plan view of a wide chain conveyor using an assembly of sprockets and a shaft for a wide chain conveyor having the above-described structure. A wide chain conveyor 7 comprises a wide chain 8 which, in turn, comprises a number of chain links arranged in a conveying direction and across the conveying direction.

In the wide chain conveyor 7, the sprocket 2A and the sprockets 2 are adapted to drive the wide chain 8. The sprocket 2A is located at the center of the shaft 1 which is located at the downstream end of the wide chain conveyor 7 in the conveying direction and connected to a driving source, and is limited in its slidable range by movement-limiting members such that it only can slide on the shaft 1 in the axial direction of the shaft 1 within a relatively narrow range. Three sprockets 2 are arranged slidably in the axial direction of the shaft 1 on each side of the sprocket 2A.

By contrast, at the upstream end of the wide chain conveyor 7, the wide chain 8 is engaged with a number of sprockets 2' and 2A' mounted on a shaft 1'. The shaft 1' and the sprockets 2' and 2A' have the same structure as that of the shaft 1 and the sprockets 2 and 2A located at the downstream end.

The upstream and downstream ends of the wide chain conveyor 7 are connected to other wide chain conveyors 11 and 12 having a structure similar to that of the wide chain conveyor 7 via dead plates 9 and 10, respectively.

In Fig. 2, an unillustrated article is conveyed on the upstream wide chain conveyor 11 and is then delivered onto the dead plate 9. The thus-delivered article slides on the dead plate 9 and is immediately transferred onto the wide chain conveyor 7. The article is conveyed downstream on the wide chain conveyor 7 and is then delivered onto the downstream wide chain conveyor 12 via the dead plate 10, which is similar to the dead plate 9.

When the wide chain 8 of the wide chain conveyor 7 expands or contracts during conveyance of an article due to variation in ambient temperature with a resultant variation in the width of the wide chain 8, sprocket pockets formed in the wide chain 8 shift widthwise. In this case, the sprockets 2 and 2' can follow the sideward shift of the sprocket pockets, since they can freely slide on the shaft 1 or 1' in the axial direction of the shaft 1 or 1'.

Also, since the sprockets 2A and 2A' located at the centers of the shafts 1 and 1' are limited in their slidable ranges by movement-limiting members such that they only can slide on the shafts 1 and 1' in the axial directions of the shafts 1 and 1' within relatively narrow ranges, the variation of the width of the wide chain 8 is substantially equally divided widthwise in reference to the sprockets 2A and 2A', thereby minimizing a displacement at both side edges of the wide chain 8 caused by variation in ambient temperature.

Also, since widthwise-measured variations in the positions of engagement between the sprockets 2A and 2A' and the wide chain 8 caused by fabrication errors and attachment errors of the sprockets 2A and 2A' and the wide chain 8 are absorbed by the clearances between the sprockets 2A and 2A' and the movement-limiting members located on both sides of the sprockets 2A and 2A', the amount of meandering of the running wide chain 8 can be minimized.

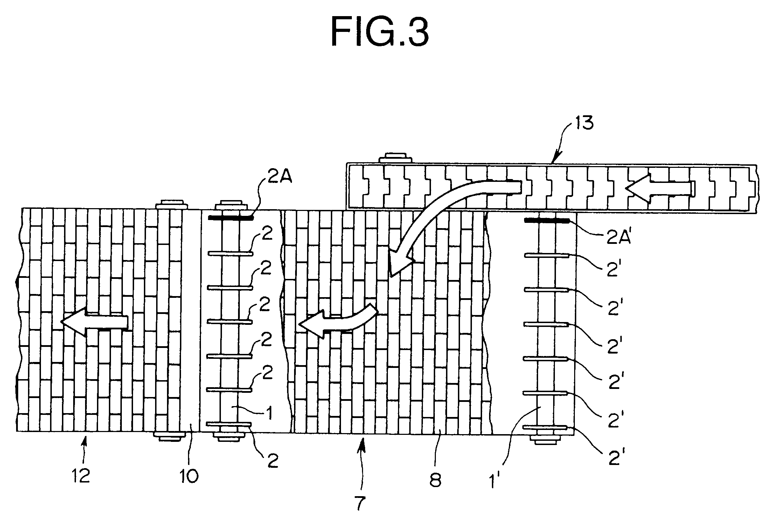

Fig. 3 is a plan view of a wide chain conveyor using an assembly of sprockets and a shaft for a wide chain conveyor according to a second embodiment of the present invention. In the present embodiment, a conveyor 13 is disposed adjacently to and by the side of a wide chain conveyor 7 such that the downstream portion of the conveyor 13 overlaps with the wide chain conveyor 7 in a conveying direction. In the present embodiment, a narrow slat conveyor is used as the conveyor 13.

An unillustrated article is conveyed on the conveyor 13 from the upstream side of the conveyor 13 and is then transferred onto the wide chain conveyor 7 by unillustrated transfer means such as a guide, a pusher, or the like. The thus-transferred article is conveyed downstream on the wide chain conveyor 7 and is then delivered onto a downstream wide chain conveyor 12 via a dead plate 10. The dead plate 10 and the wide chain conveyor 12 have the same structure as that of Fig. 2.

In the present embodiment, sprockets 2 and 2' supported by a driving shaft 1 and a follower shalt 1' rotate with the shafts 1 and 1' and are slidable on the shafts 1 and 1' in the axial directions of the shafts 1 and 1', as in the first embodiment. By contrast, sprockets 2A and 2A' are limited in their slidable ranges by movement-limiting members such that they only can slide on the shafts 1 and 1'in the axial directions of the shafts 1 and 1' within relatively narrow ranges. Further, the sprockets 2A and 2A' are located in proximity to the conveyor 13.

According to the present embodiment, since the sprockets 2A and 2A' limit a widthwise-measured displacement of the side edge portion of the wide chain 8 adjacent to the conveyor 13, the clearance between the wide chain conveyor 7 and the conveyor 13 can be minimized even when the width of the wide chain 8 varies due to variation in ambient temperature. As a result, there is prevented the problem that part of an article becomes caught in the clearance during transfer from the conveyor 13 to the wide chain conveyor 7 with the resultant falling of or damage to the article.

In the present embodiment, the upstream conveyor 13 is disposed adjacently to and by the side of the wide chain conveyor 7 such that the downstream portion of the conveyor 13 overlaps with the wide chain conveyor 7. By contrast, when a downstream conveyor is disposed adjacently to and by the side of the wide chain conveyor 7 such that the upstream portion of the downstream conveyor overlaps with the wide chain conveyor 7, the sprockets 2A and 2A', whose slidable ranges are limited by movement-limiting members, may be located in proximity to the downstream conveyor. The conveyor 13 may use rollers, a belt, or the like as conveying means.

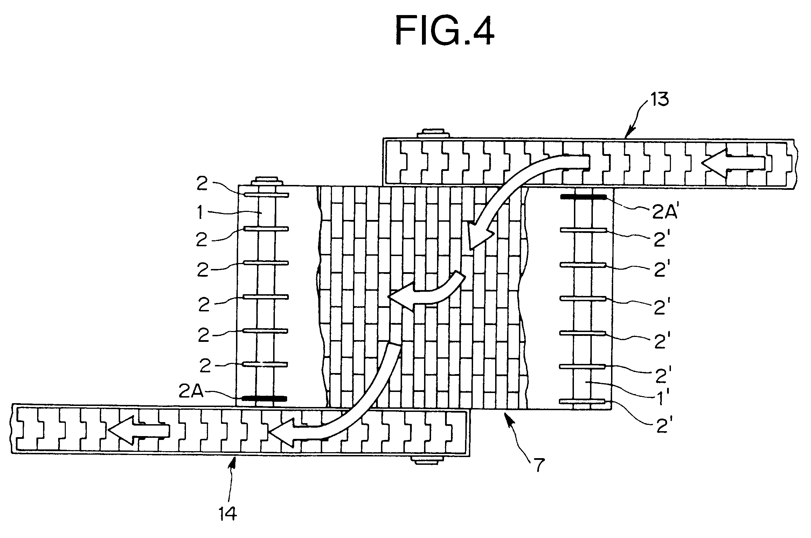

Fig. 4 is a plan view of a wide chain conveyor using an assembly of sprockets and a shaft for a wide chain conveyor according to a third embodiment of the present invention. In the present embodiment, a conveyor 13 is disposed adjacently to and by the side of a wide chain conveyor 7 such that the downstream portion of the conveyor 13 overlaps with the wide chain conveyor 7 in a conveying direction, and a conveyor 14 is disposed adjacently to and by the opposite side of the wide chain conveyor 7 such that the upstream portion of the conveyor 14 overlaps with the wide chain conveyor 7 in the conveying direction.

An unillustrated article is conveyed on the conveyor 13 from the upstream side of the conveyor 13 and is then transferred onto the wide chain conveyor 7. The thus-transferred article is conveyed downstream on the wide chain conveyor 7 and is then delivered onto the downstream conveyor 14. As used in the above-described embodiments, transferring means such as a guide, a pusher, or the like may be used for transferring an article from the conveyor 13 to the wide chain conveyor 7 and from the wide chain conveyor 7 to the conveyor 14.

In the present embodiment, sprockets 2 and 2' supported by a driving shaft 1 and a follower shaft 1' rotate with the shafts 1 and 1' and are slidable on the shafts 1 and 1' in the axial directions of the shafts 1 and 1', as in the above-described embodiments. By contrast, a sprocket 2A located in proximity to the conveyor 14 and a sprocket 2A' located in proximity to the conveyor 13 are limited in their slidable range by movement-limiting members such that they only can slide on the shafts 1 and 1', respectively, in the axial direction of the shafts 1 and 1' within a relatively narrow range.

According to the present embodiment, the clearance between the upstream conveyor 13 and the wide chain conveyor 7 and the clearance between the downstream conveyor 14 and the wide chain conveyor 7 can both be maintained minimally. Accordingly, as in the above-described second embodiment, there is prevented the problem that part of an article becomes caught in the clearance during transfer from one conveyor to another conveyor with the resultant falling of or damage to the article.

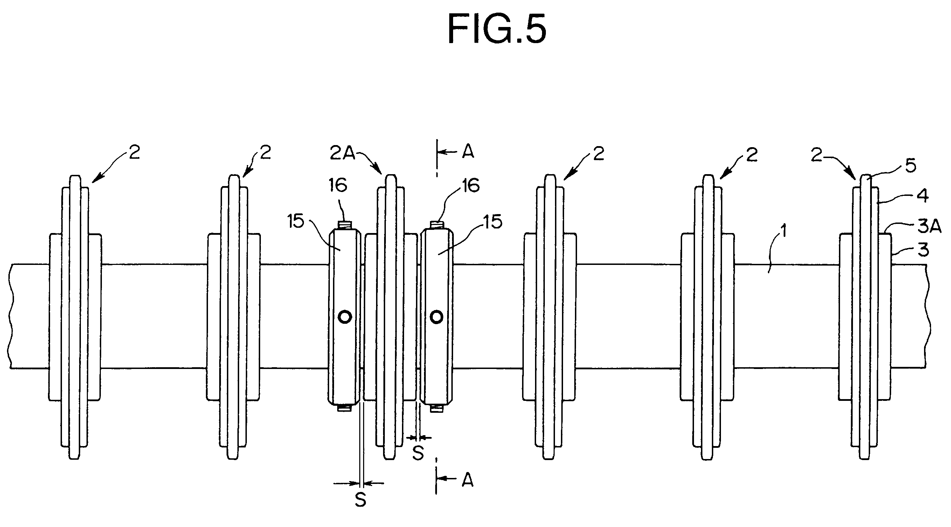

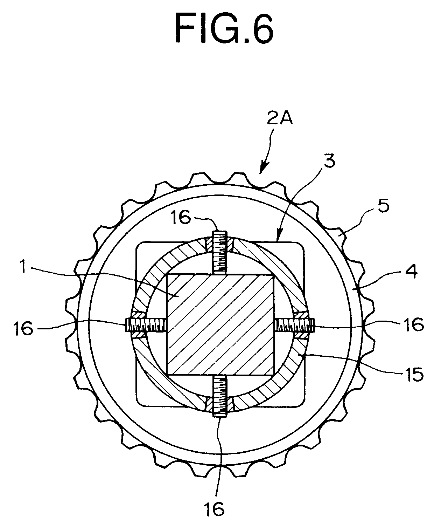

Fig. 5 is a partial side view showing an assembly of sprockets and a shaft for a wide chain conveyor according to a fourth embodiment of the present invention. Fig. 6 is a sectional view taken along line A-A of Fig. 5. In Figs. 5 and 6, members denoted by those numerals used in common with Fig. 1 have the same structure as that of those members shown in Fig. 1.

In the present embodiment, a pair of movement-limiting rings 15 are used as movement-limiting members for limiting a sprocket 2A such that it only can slide in the axial direction of a shaft 1 within a relatively narrow range. As shown in Fig. 6, the movement-limiting ring 15 has four tapped holes along its circumference. A set screw 16 is engaged with each of the tapped holes so as to grip four side surfaces of the shaft 1 by tip ends of the set screws 16, thereby fixing the movement-limiting ring 15 on the shaft 1 at a predetermined position.

A clearance S between the side surface of each movement-limiting ring 15 and each of both side surfaces of a boss 3 of the sprocket 2A is preferably set to about 0.5 mm, as in the first embodiment. The movement-limiting members of the present embodiment do not require any machining on the shaft 1, so that the strength of the shaft 1 remains intact.

The above-described embodiments use a shaft having a tetragonal cross section. However, the cross section of the shaft may have any other noncircular shape such as hexagonal, octagonal, or the like. Alternatively, a shaft having a circular cross section may be combined with a sprocket having a circular shaft hole, and they may be fixed against mutual rotation by inserting a key into a keyway formed in them. The movement-limiting members are not limited to those shown in the above-described embodiments, but may have any structure so long as a sprocket slidable on a shaft is limited in its slidable range in the axial direction of the shaft.

### [Effect of the Invention]

As described above, according to an assembly of sprockets and a shaft for a wide chain conveyor of the present invention, one of a plurality of sprockets, which are fitted on a shaft such that they are restrained from rotating relative to the shaft but are slidable in the axial direction of the shaft, is limited in its slidable range in the axial direction of the shaft by movement-limiting members. Also, this slidable range is set substantially equal to the sum of a maximum widthwise-measured deflection of the sprocket during rotation, which deflection is caused by a fabrication error of the sprocket and an error produced when the sprocket is attached to the shaft, and an amount of meandering of a wide chain, which meandering is caused by a fabrication error of sprocket pockets formed in the wide chain for engagement with the sprocket. Thus, variation in the width of a wide chain conveyor caused by variation in ambient temperature can be coped with by varying intervals between sprockets. Further, the amount of meandering of the wide chain conveyor can be minimized, and wear of the sprocket pockets of the wide conveyor chain and the teeth of the sprockets can be reduced.

Also, when the movement-limiting members limit the slidable range of a sprocket located substantially at the widthwise-measured center of the wide chain, the width of the wide chain varies in accordance with variation in ambient temperature such that the width variation is symmetrical in reference to the center of the wide chain, thereby minimizing a positional variation at both side edges of the wide chain.

Further, when the movement-limiting members limit the slidable range of a sprocket located closest to a conveyor which is disposed by the side of and adjacently to the wide chain for transferring an article to and from the wide chain, variation in the clearance between the wide chain and the adjacent conveyor caused by variation in ambient temperature is minimized. Thus, there is prevented the problem that part of an article becomes caught in the clearance during transfer from the wide chain to and from the adjacent conveyor with the resultant falling of or damage to the article.

### [BRIEF DESCRIPTION OF THE DRAWINGS]

### [Fig. 1]

Partial side view showing the structure of an assembly of sprockets and a shaft for a wide chain conveyor according to a first embodiment of the present invention.

### [Fig. 2]

Plan view of a wide chain conveyor using the assembly of sprockets and a shaft for a wide chain conveyor according to the first embodiment.

### [Fig. 3]

Plan view of a wide chain conveyor using an assembly of sprockets and a shaft for a wide chain conveyor according to a second embodiment of the present invention.

### [Fig. 4]

Plan view of a wide chain conveyor using an assembly of sprockets and a shaft for a wide chain conveyor according to a third embodiment of the present invention.

### [Fig. 5]

Partial side view showing the structure of an assembly of sprockets and a shaft for a wide chain conveyor according to a fourth embodiment of the present invention.

### [Fig. 6]

Sectional view taken along line A-A of Fig. 5.

### [Description of Symbols]

- 1:: shaft
- 2, 2A, 2', 2A':: sprocket
- 3:: boss portion
- 3A:: circumferential surface
- 4:: rim portion
- 5:: teeth
- 6, 16:: hexagon socket screw (movement-limiting member)
- 6':: hexagon head cap screw (movement-limiting member)
- 7, 11, 12:: wide chain conveyor
- 8:: wide chain
- 9, 10:: dead plate
- 13, 14:: conveyor
- 15:: movement-limiting ring (movement-limiting member)

## Claims

1. An assembly of sprockets and a shaft for a wide chain conveyor, characterized in that one of a plurality of sprockets, which are fitted on a shaft such that they are restrained from rotating relative to said shaft but are slidable in the axial direction of said shaft, is limited in its slidable range in the axial direction of said shaft by movement-limiting members fixed on said shaft on both sides of and adjacently to said sprocket, wherein
said slidable range is set substantially equal to the sum of a maximum widthwise-measured deflection of said sprocket during rotation, which deflection is caused by a fabrication error of said sprocket and an error produced when said sprocket is attached to said shaft, and an amount of meandering of a wide chain, which meandering is caused by a fabrication error of sprocket pockets formed in said wide chain for engagement with said sprocket.

2. An assembly of sprockets and a shaft for a wide chain conveyor according to Claim 1, characterized in that said movement-limiting members limit the slidable range of a sprocket located substantially at the widthwise-measured center of said wide chain.

3. An assembly of sprockets and a shaft for a wide chain conveyor according to Claim 1, characterized in that said movement-limiting members limit the slidable range of a sprocket located closest to a conveyor which is disposed by the side of and adjacently to said wide chain for transferring an article to and from said wide chain.
